Europäisches Patentamt

European Patent Office

Office européen des brevets

(19)

(11) Publication number: **0 262 936 B1**

(12) EUROPEAN PATENT SPECIFICATION

(45) Date of publication of patent specification: **26.08.92**    (51) Int. Cl.⁵: **C08F 4/64**, C08F 10/00

(21) Application number: **87308636.7**

(22) Date of filing: **29.09.87**

(54) **Catalyst components for polymerization catalysts of alpha-olefines and a method for their production.**

(30) Priority: **29.09.86 FI 863929**

(43) Date of publication of application:
**06.04.88 Bulletin  88/14**

(45) Publication of the grant of the patent:
**26.08.92 Bulletin  92/35**

(84) Designated Contracting States:
**AT BE CH DE ES FR GB GR IT LI LU NL SE**

(56) References cited:
**DE-A- 3 501 858**
**DF-A- 2 115 996**
**GB-A- 2 082 602**
**US-A- 4 301 029**

(73) Proprietor: **NESTE OY**
**Keilaniemi**
**SF-02150 Espoo 15(FI)**

(72) Inventor: **Seppanen, Hanneli**
**Rudolfintie 21 I 74**
**SF-00870 Helsinki(FI)**
Inventor: **Krause, Outi**
**Kaunispaantie 3 F 59**
**SF-00970 Helsinki(FI)**

(74) Representative: **Lamb, John Baxter et al**
**MARKS & CLERK 57-60 Lincoln's Inn Fields**
**London WC2A 3LS(GB)**

## Description

The invention concerns catalyst components for such polymerization catalysts of α-olefines which consist of an organoaluminium compound, an electron donor and a solid catalyst compound, obtained when a compound containing magnesium reacts with a titanium halogen compound. The invention also concerns a method for the production of these catalyst components as well as a method for the polymerization of α-olefines, particularly propylene utilizing these catalyst components.

High-activity catalysts, produced from an aluminium alkyl compound, an electron donor and a halogenated titanium compound on a solid carrier containing various magnesium compounds, are known for polymerization of α-olefines. The most commonly used magnesium compound is anhydrous magnesium chloride, either alone or together with other magnesium compounds, or organic magnesium compound, manufactured by halogenating organic magnesium compounds with compounds containing chlorine. The magnesium compound may also be included in the solid carrier component for which silica is most commonly used.

In this type of polymerization catalysts the properties of the solid carried component have a significant influence on the properties of the final catalyst, eg. on its activity. These properties can be essentially influenced by the carrier component's production method.

In the invention it has been noted that when polymerizing α-olefines, particularly propylene, it is possible to obtain considerably better yields and isotactic values of silica is replaced by magnesium silicate as the solid carrier component and further, certain procedures are adopted in the manufacture of the catalyst component.

The use of magnesium silicate in the Ziegler-Natta catalysts is no novelty in itself. Thus, for example, according to the method presented in the GB patent publication 2 082 602 magnesium alkyl is dissolved or suspended into an inert hydrocarbon solvent, magnesium silicate is added and after that, the obtained solid catalyst compound is washed and treated with titanium tetrachloride. The thus produced catalyst is used in the homopolymerization and copolymerization of ethylene. In the method presented in DE patent publication 3 011 326, magnesium halide, eg. magnesium chloride, is dissolved in ethanol, magnesium silicate treated with a chlorinating agent is added in the produced solution, the magnesium halide is precipitated by adding the mixture into a hydrocarbon solvent, eg. heptane, and the thus obtained component is treated with titanium tetrachloride. The thus produced catalyst has been applied also in the polymerization of propylene, but the isotactic value obtained for the polymer in this method ranges between 92-93 %.

The catalyst presented in this invention is applicable in the manufacture of stereospecific polymers, particularly polypropylene, so that the isotactic values are high, up to over 96 %.

The catalyst component of this invention is known for having been manufactured by bringing a solid catalyst component which has been produced by

a) allowing a magnesium alkyl compound to react with a chlorinating agent,

b) dissolving the chlorinated magnesium alkyl compound in alcohol after possible washing,

c) adding into the solution magnesium silicate which has been calcined by heating at 200-600°C,

d) adding the mixture obtained in stage c) in a cold medium to precipitate the magnesium compound to the magnesium silicate carrier,

e) separating the obtained solid carrier component,

to react with a titanium halogen compound in the presence of an internal electron donor.

The invention also concerns a method for producing catalyst components for such polymerization catalysts of α-olefines which consist of an organoaluminium compound, an electron donor and a solid magnesium-containing catalyst component which has been produced when a solid carrier component containing magnesium reacts with a titanium halogen compound. The method presented in the invention is known for the catalyst component having been obtained by bringing a solid carrier component which has been produced by

a) allowing a magnesium alkyl compound to react with a chlorinating agent,

b) dissolving the chlorinated magnesium alkyl compound in alcohol after possible washing,

c) adding into the solution magnesium silicate which has been calcined by heating at 200-600°C,

d) adding the mixture obtained in stage c) in a cold medium to precipitate the magnesium compound to the magnesium silicate carrier,

e) separating the obtained solid carrier component,

to react with a titanium halogen compound in the presence of an internal electron donor.

The magnesium silicate used in stage (c) when producing the catalyst component presented in the invention, is preferably a well mixed mixture of silica and magnesium oxide, or a coprecipitation of silica and magnesium oxide. The manufacture of a coprecipitated silicon magnesium oxide (magnesium silicate) is well-known in the field. Coprecipitations of silica and magnesium oxide are commercially available. Silica and magnesium oxide can be effectively mixed by eg. grinding a mixture of these two oxides in a ball mill. Another method for preparing a suitable magnesium silicate is to heat up a mixture containing particles of silica or alkali metal silicate and a magnesium compound; when heated, these precipitate into magnesium silicate. As examples of magnesium compounds that can be heated up like this with silica or alkali metal silicate we can mention magnesium alkoxides, magnesium hydroxide, magnesium carbonate, magnesium sulphate, magnesium chloride and magnesium nitrate. In this invention it is preferrable to use magnesium silicate precipitated of magnesium sulphate or magnesium chloride and sodium silicata, as a carrier.

Magnesium silicate is calcined before using it as a catalyst component. The calcination can be performed by heating the magnesium silicate up at 200°-600°C for 2-16 hours.

When preparing a carried component presented in the invention, all reactants are usually dried and treated with nitrogen (moisture and oxygen content < 10 ppm).

The magnesium alkyl compound used as a reactant in the catalyst component presented in the invention is usually of form $MgR'_2$ or $MgR'R''$ where $R'$ and $R''$ are either the same or different and contain alkyls from $C_1$ to $C_{20}$, preferably $C_2$-$C_{12}$. The magnesium compound can be, for example, diethyl magnesium, ethyl-butyl magnesium, ethyl-hexyl magnesium, ethyl-octyl magnesium, dibutyl magnesium, butyl-hexyl magnesium, butyl-octyl magnesium, dihexyl magnesium, hexyl-octyl magnesium, dioctyl magnesium, etc. The most recommendable of these magnesium alkyl compounds is butyl-octyl magnesium.

The chlorinating agent may be chlorine, hydrogen chloride, alkyl chloride (eg. butyl-chloride), $TiCl_4$, or their mixtures.

The clorination can be performed at a temperature of -10 - 100°C, preferably at 10 - 60°C. After the chlorination the reaction mixture can be treated with nitrogen for 15-60 minutes to ensure complete chlorination.

The clorinated magnesium alkyl compound can be treated with a small amount of alcohol, but even without the alcohol treatment the finished catalyst may prove highly active. The alcohol may be either aliphatic or aromatic, and it may contain one or several hydroxyl groups, such as eg. methanol, ethanol, 2-ethyl hexanol. If the alcohol treatment is performed, the precipitate can be washed several times with a hydrocarbon solvent and the surplus solvent is evaporated off by means of a nitrogen flow. After this the precipitate is dissolved in ethanol and the magnesium silicate carrier which has been calcined by heating it up for two hours at a temperature of 600°C is added to this solution.

The carrier is allowed to impregnate in this solution at a temperature of 60 - 70°C. Normally a treatment time of 3 - 24 hours is sufficient.

The magnesium silicate carrier with its impregnation solution is siphonated to a cold (under 0°C) hydrocarbon solvent, upon which the magnesium compound of the solution immediately precipitates into the pores and on the surface of the magnesium silicate carrier. The solvent's temperature may vary between - 30 and -5°C. The obtained carrier component is washed several times with a hydrocarbon solvent. After the washing the carrier component is treated with titanium tetrachloride in the presence of an internal electron donor by a method known in itself in order to produce the catalyst component. The titanium treatment may take place eg. in such a way that the solid carrier component is allowed to react with titanium tetrachloride, either once or several times. Titanium treatment should preferably take place in two stages so that in the first stage an internal electron donor compound, usually of type amine, ether or ester, is added. A suitable donor is eg. diisobutyl phtalate.

In the first stage it is recommended that a low temperature be employed, eg. under 0°C, preferably under -20°C. The temperature is raised during the titanium treatment to 90-110°C. The second titanium treatment is performed at a temperature of 90-110°C for 1-2 hours. The solid reaction product is separated fron the liquid phase and washed with hydrocarbon solvent to remove impurities and derivatives. The catalyst component is dried with nitrogen gas at room temperature or at a slightly higher temperature.

The catalyst component introduced in the invention can be used to polymerize $\alpha$-olefines by allowing it to come into contact with an Al-compound and an external electron donor. As external electron donor, among others, amines, ethers, esters (preferably alkyl or aryl esters of aromatic carboxyl acids) or silane compounds (aryl/alkyl silanes) such as methyl och ethyl esters of benzoic acid, toluene acid and phtalic acid, isobutyl esters of phtalic acid, triethoxy silane, etc., can be used. The stated electron donors are compounds that are capable of formning complexes with Al-alkyls. They can be used to improve the stereospecific properties of the catalyst. The external electron donor and the Al-alkyl are mixed together with the molar ratio of electron donor and Al-alkyl being 10-30 and the Al/Ti molar ratio being 10-300 depending on the polymerization system. The polymerization can be carried out either as slurry, bulk or gas phase polymerization. Catalyst components and catalysts produced addording to this invention can be used in the polymerization of $\alpha$-olefines, such as pro-

pylene, by slurry, bulk of gas phase methods.

Example 1

60 ml of magnesium alkyl (butyl-octyl magnesium as a 20 % heptane solution) and 60 ml of heptane were measured into a five-necked flask which was provided with a mechanical stirrer, a reflux condenser, a gas sypply valve and a thermometer. The suspension was treated with nitrogen and kept under inert conditions throughout the manufacturing process. The mixture was chlorinated with chlorine gas at a rate of 0.25 l/min for 10-25 min at a temperature of 10-56°C. After this the mixture was treated with nitrogen for 30 min, heated up to 94-98°C and 20 ml of ethanol was added, upon which the chlorinated precipitate thickened. The precipitate was twice washed with 250 ml of heptane, and after the washings the excess of solvent was evaporated by means of nitrogen flow. The precipitate was dissolved into 45 ml of ethanol at 80°C, 5-6 g of magnesium silicate that had been calcined by heating up for 2 hours at 600°C and cooled down under nitrogen, was added to the solution as well as 5 ml of ethanol. The mixture was stirred at 70°C overnight. The hot mixture was siphonated to cold (-20°C) heptane, upon which the dissolved magnesium component precipitated in the pores and on the surface of the magnesium silicate. The solid component was washed at room temperature twice with heptane and was then cooled down to -25°C at which temperature 200 ml of titanium tetrachloride was added. After that, the mixture's temperature was allowed to rise to room temperature at which temperature 3 ml of di-isobutyl phtalate was added. The temperature was raised to 100-110°C and the mixture was stirred for 60 min. After the precipitate has sedimentated, the solution was removed by siphonating. The titanium tetrachloride treatment was repeated with 200 ml of titaniumtetrachloride at 100-110°C for 60 min. After the precipitate sedimentated and the solution had been siphonated, the finished catalyst component was washed several times (5-6 times at a temperature of 80°C) with heptane and dried in a nitrogen flow. The catalyst component contained Mg 9.5 %, Ti 3.0 %, Si 10.2 % and Cl 26.0 %. The catalyst component manufactured by the above describes method was used in the polymerization of propylene by adding into a 2 l polymerization reactor a catalyst that had been prepared by mixing triethyl aluminium as aluminium alkyl and diphenyl dimethoxy silane as Lewis compound (Al/donor molar ratio 20) with 50 ml of heptane and then after five minutes, adding the catalyst component into this mixture so that the Al/Ti molar ratio was 200. The polymerization was performed in the following conditions: propylene's partial pressure 9.0 bar, hydrogen's partial pressure 0,3 bar, temperature 70°C and polymerization time 3 h. The catalyst's polymerization activity became 3.8 kg PP/g cat. 3 h, i.e. 127.0 kg PP/gTi. The polymer's isotactity was 96.0 % and bulk density 0.28 g/min.

Example 2

The catalyst component was produced as in Example 1, but the used magnesium silicate had been calcined for 4 hours at 400°C and cooled down in nitrogen flow. The catalyst component contained Mg 9.0 %, Ti 3.3 %, Si 11.3 % and Cl 20.0 %. The catalyst's polymerization activity became 4.4 kg PP/g cat. 3 h, i.e. 134.0 kg PP/g Ti. The polymer's isotactity was 96.4 %.

Example 3

The catalyst component was produced as in Example 1, but the used magnesium silicate had been calcined for 4 hours at 200°C and cooled down in nitrogen flow. The catalyst component contained Mg 10.0 %, Ti 3.3 %, Si 13.3 % and Cl 28.0 %. The catalyst's polymerization activity became 5.6 kg PP/g cat. 3 h, i.e. 169 kg PP/g Ti. The polymer's isotactity was 96.3 % and bulk density 0.23 g/ml.

A comparative example

The catalyst component was produced as in Example 1, but magnesium silicate was replaced by a commercial silica ($SiO_2$ - Davison 952). The catalyst component contained Mg 6.0 %, Ti 4.0 %, Si 22.0 % and Cl 26.0 %. The catalyst's polymerization activity became 3.3 kg PP/g cat. 3 h. The polymer's isotactity was 78.8 % and bulk density 0.32 g/ml.

The test shows that when using a silica carrier the polymer's isotactity is very low. Also when compared with polymers produced according to DE patent publication 3 011 326, the improvement in the isotactic value is evident.

**Claims**

1. A catalyst component for an α-olefine polymerization catalyst comprising an organoaluminium compound, an electron donor and a solid catalyst component obtained by reaction of a magnesium-containing compound with a titanium halogen compound, characterized in that the catalyst component is prepared by reacting, with a titanium halogen compound, in the presence of an internal electron donor, a compound prepared by the steps of:

   (a) reacting a magnesium alkyl compound with a chlorinating agent;

(b) dissolving the chlorinated magnesium alkyl compound in alcohol, optionally after washing;

(c) adding to the solution obtained in step (b) magnesium silicate which has been calcined by heating at 200-600°C;

(d) adding the mixture obtained in step (c) to a cold medium to precipitate the magnesium compound on the magnesium silicate carrier; and

(e) separating the resultant solid carrier component.

2. A method for producing a catalyst component for an α-olefin polymerization catalyst comprising an organoaluminium compound, an external electron donor and a solid catalyst component obtained by reaction of a magnesium-containing compound with a titanium halogen compound characterised in that the method comprises the steps of:-

(a) reacting a magnesium alkyl compound with a chlorinating agent;

(b) dissolving the chlorinated magnesium alkyl compound in alcohol, optionally after washing;

(c) adding to the solution from step (b) magnesium silicate which has been calcined by heating at 200-600°C;

(d) adding the mixture obtained in step (c) to a cold medium to precipitate the magnesium compound on the magnesium silicate carrier;

(e) separating the resultant solid carrier component; and

(f) reacting the solid carrier component with a titanium halogen compound in the presence of an internal electron donor.

3. A method as claimed in claim 2 characterized in that the magnesium silicate used in step (c) is a mixture of silica and magnesium oxide or a coprecipitate of silica and magnesium oxide.

4. A method as claimed in claim 2 characterised in that the magnesium silicate used in step (c) is a precipitate formed by reaction of magnesium sulphate or magnesium chloride with sodium silicate.

5. A method as claimed in any one of claims 2-4 characterized in that the magnesium alkyl compound is butyl-octyl magnesium.

6. A method as claimed in any one of claims 2-5 characterized in that the chlorinating agent is chlorine, hydrogen chloride, an alkyl chloride

or TiCl$_4$.

7. A method as claimed in any one of claims 2-6 characterized in that the precipitate formed in the chlorination of the magnesium compound is treated with alcohol.

8. A method as claimed in any one of claims 2-7 characterized in that the titanium tetrachloride treatment is performed in two stages with the internal electron donor compound being added in connection with the first stage.

9. A method as claimed in any one of claims 2-8 characterized in that the electron donor compound is di-isobutyl phthalate.

10. The use of a catalyst component produced by a method as claimed in any one of claims 2-9, in the polymerization of α-olefines, particularly propylene, in the presence of an aluminium compound and an external electron donor.

**Patentansprüche**

1. Katalysatorbestandeil für einen alpha-Olefinpolymerisationskatalysator, umfassend eine Organoaluminiumverbindung, einen Elektronendonator und einen festen Katalysatorbestandteil, der durch Reaktion einer Magnesium enthaltenden Verbindung mit einer Titanhalogenverbindung erhalten wird, dadurch gekennzeichnet, dass
der Katalysatorbestandteil hergestellt wird durch Umsetzen mit einor Titanhalogenverbindung in Gegenwart eines inneren Elektronendonators von einer Verbindung, die durch die Schritte hergestellt wird;

(a) Umsetzung einer Magnesiumalkylverbindung mit einem Chlorierungsmittel;

(b) Auflösen der chlorierten Magnesiumalkylverbindung in Alkohol, wahlweise nach dem Waschen;

(c) Hinzufügen von Magnesiumsilicat, welches durch Erhitzen bei 200 - 600°C geglüht wurde, zu der in Schritt (b) erhaltenen Lösung;

(d) Hinzufügen der in Schritt (c) erhaltenen Mischung zu einem kalten Lösungsmittel zum Ausfällen der Magnesiumverbindung auf dem Magnesiumsilicat-Träger, und

(e) Abtrennen des resultierenden festen Trägerbestandteils.

2. Verfahren zur Herstellung eines Katalysatorbestandteils für einen alpha-Olefinpolymerisationskatalysator, umfassend eine Organoaluminiumverbindung, einen äusseren Elektronendonator und einen festen Katalysatorbestandteil, der durch Reaktion einer Magnesium enthaltenden Verbindung mit einer Titanhalogenverbindung erhalten wird, dadurch gekennzeichnet, dass das Verfahren die Schritte umfasst:

(a) Umsetzung einer Magnesiumalkylverbindung mit einem Chlorierungsmittel;

(b) Auflösen der chlorierten Magnesiumalkylverbindung in Alkohol, wahlweise nach dem Waschen;

(c) Hinzufügen von Magnesiumsilicat, welches durch Erhitzen bei 200 - 600°C geglüht wurde, zu der in Schritt (b) erhaltenen Lösung;

(d) Hinzufügen der in Schritt (c) erhaltenen Mischung zu einem kalten Lösungsmittel zum Ausfällen der Magnesiumverbindung auf dem Magnesiumsilicat-Träger;

(e) Abtrennen des resultierenden festen Trägerbestandteils; und

(f) Umsetzung des festen Trägerbestandteils mit einer Titanhalogenverbindung in Gegenwart eines inneren Elektronendonators.

3. Verfahren nach Anspruch 2, dadurch gekennzeichnet, dass das in Schritt (c) verwendete Magnesiumsilicat eine Mischung aus Siliciumdioxid und Magnesiumoxid oder eine Mitfällung von Siliciumdioxid und Magnesiumoxid ist.

4. Verfahren nach Anspruch 2, dadurch gekernzeichnet, dass das in Schritt (c) verwendete Magnesiumsilicat ein durch Reaktion von Magnesiumsulfat oder Magnesiumchlorid mit Natriumsilicat gebildeter Niederschlag ist.

5. Verfahren nach einem der Ansprüche 2 bis 4, dadurch gekennzeichnet, dass die Magnesiumalkylverbindung Butyloctylmagnesium ist.

6. Verfahren nach einen der Ansprüche 2 bis 5, dadurch gekennzeichnet, dass das Chlorierungsmittel Chlor, Chlorwasserstoff, ein Alkylchlorid oder $TiCl_4$ ist.

7. Verfahren nach einem der Ansprüche 2 bis 6, dadurch gekennzeichnet, dass der bei der Chlorierung der Magnesiumverbindung gebildete Niederschlag mit Alkohol behandelt wird.

8. Verfahren nach einem der Ansprüche 2 bis 7, dadurch gekennzeichnet, dass die Behandlung mit Titantetrachlorid in zwei Stufen durchgeführt wird, bei welchem die Verbindung des inneren Elektronendonators in Verbindung mit der ersten Stufe zugesetzt wird.

9. Verfahren nach einem der Ansprüche 2 bis 8, dadurch gekennzeichnet, dass die Verbindung des Elektronendonators Diisobutylphthalat ist.

10. Verwendung eines Katalysatorbestandteils, der nach einem Verfahren nach einem der Ansprüche 2 bis 9 in der Polymerisation von alpha-Olefinen, insbesondere Propylen, in Gegenwart einer Aluminiumverbindung und eines äusseren Elektronendonators hergestellt wird.

**Revendications**

1. Composant de catalyseur pour un catalyseur de polymérisation d'α-oléfines comprenant un composé organoalumininique, un donneur d'électrons et un composant de catalyseur solide obtenu par mise an réaction d'un composé contenant du magnésium avec un composé halogéné au titane, caractérise en ce que le composant de catalyseur est préparé par mise an réaction avec un composé halogéné au titane en présence d'un donneur d'électrons interne, un composé préparé par les étapes consistant à :

(a) mettre en réaction un composé alkyle de magnésium avec un agent de chloration ;

(b) dissoudre le composé alkyle de magnésium chloré dans l'alcool, facultativement après lavage ;

(c) ajouter à la solution obtenue à l'étape (b) du silicate de magnésium qui a été calciné par chauffage à 200-600°C ;

(d) ajouter le mélange obtenu à l'étape (c) à un milieu froid pour précipiter le composé magnésium sur le porteur de silicate de magnésium ; et

(e) séparer la composant porteur solide résultant.

2. Procédé pour la production d'un composant de catalyseur pour un catalyseur de polymérisation d'α-oléfines comprenant un composé organoaluminique, un donneur d'électrons externe et un composant de catalyseur solide obtenu par mise an réaction d'un composé contenant du magnésium avec un composé halogéné au titane, caractérisé en ce que la procédé comprend les étapes consistant à :

(a) mettre en réaction un composé alkyle de magnésium avec un agent de chloration ;

(b) dissoudre le composé alkyle de magnésium chloré dans l'alcool, facultativement après lavage ;

(c) ajouter à la solution de l'étape (b) du silicate de magnésium qui a été calciné par chauffage à 200-600°C;

(d) ajouter le mélange obtenu à l'étape (c) à un milieu froid pour précipiter le composé de magnésium sur le porteur au silicate de magnésium ;

(e) séparer le composant du porteur solide résultant ; et

(f) faire réagir le composant porteur solide avec un composé halogéné au titane en présence d'un donneur d'électrons interne.

3. Procédé selon la revendication 2, caractérisé en ce que le silicate de magnésium utilisé à l'étape (c) est un mélange de silice et d'oxyde de magnésium ou un coprécipité de silice et d'oxyde de magnésium.

4. Procédé selon la revendication 2, caractérisé en ce que le silicate de magnésium utilisé à l'étape (c) est un précipité formé par réaction du sulfate de magnésium ou du chlorure de magnésium avec du silicate de sodium.

5. Procédé selon l'une quelconque des revendications 2-4, caractérisé en ce que le composé alkyle de magnésium est du magnésium butyle-octyle.

6. Procédé selon l'une quelconque des revendications 2-5, caractérisé en ce que l'agent de chloration est la chlore, du chlorure d'hydrogène, un chlorure alkyle ou un tétrachlorure de titane ($TiCl_4$).

7. Procédé selon l'une quelconque des revendications 2-6, caractérisé en ce que le précipité formé dans la chloration du composé de magnésium est traité avec de l'alcool.

8. Procédé selon l'une quelconque des revendications 2-7, caractérisé en ce que le traitement au tétrachlorure de titane est réalisé en deux étapes avec le composé donneur d'électrons interne ajouté en liaison avec la première étape.

9. Procédé selon l'une quelconque des revendications 2-8, caractérisé en ce que le composé donneur d'électrons est le phtalate de di-isobutyle.

10. Utilisation d'un composant de catalyseur produit par un procédé selon l'une quelconque des revendications 2-9, dans la polymérisation d'$\alpha$-oléfines, notamment du propylène, en présence d'un composé d'aluminium et d'un donneur d'électrons externe.